# EUROPÄISCHE PATENTSCHRIFT

(11) **EP 1 451 046 B1**
(45) Veröffentlichungstag und Bekanntmachung des Hinweises auf die Patenterteilung: **17.05.2006**
(21) Anmeldenummer: 02754300.8
(22) Anmeldetag: 02.07.2002
(51) Int. Cl.: B60S 1/04

(54) **SCHEIBENWISCHVORRICHTUNG, INSBESONDERE FÜR EIN KRAFTFAHRZEUG**
WINDSCREEN WIPER DEVICE IN PARTICULAR FOR A MOTOR VEHICLE
DISPOSITIF D'ESSUIE-GLACE NOTAMMENT DESTINE A UN VEHICULE

(30) Priorität: 27.11.2001 DE 10158098
(43) Veröffentlichungstag der Anmeldung: 01.09.2004
(73) Patentinhaber: ROBERT BOSCH GMBH, 70442 Stuttgart (DE)
(72) Erfinder: KRAUS, Achim, 77815 Bühl (DE); RAPP, Juergen, 77886 Lauf (DE)
(86) Internationale Anmeldenummer: PCT/DE2002/002395
(87) Internationale Veröffentlichungsnummer: WO 2003/047924

(56) Entgegenhaltungen:
- EP-A- 1 125 805
- DE-A- 19 829 320
- DE-A- 19 833 158
- DE-A- 19 833 159
- PATENT ABSTRACTS OF JAPAN vol. 1997, no. 06, 30. Juni 1997 (1997-06-30) -& JP 09 039742 A (JIDOSHA DENKI KOGYO CO LTD), 10. Februar 1997 (1997-02-10)

## Beschreibung

### Stand der Technik

Die Erfindung betrifft eine Scheibenwischvorrichtung nach Gattung des unabhängigen Anspruchs.

Es sind bereits zahlreiche Scheibenwischvorrichtungen bekannt, die ein Trägerrohr aufweisen, an dessen Ende ein Wischerlager befestigt ist, welches eine Wischerwelle lagert. Bei diesen Anlagen ist auf der dem Trägerrohr abgewandten Seite des Wischerlagers ein Auge zur Befestigung an der Karosserie des Fahrzeugs angeordnet.

Weiterhin sind Wischvorrichtungen bekannt, beispielsweise aus der DE198 33 158 A1, die anstatt eines Auges ein Querloch im Trägerrohr zur Befestigung der Scheibenwischvorrichtung aufweisen. Bei diesen Vorrichtungen befindet sich das Querloch jedoch an den äußersten Enden des Trägerrohrs, im Bereich der Wischerlager. Dies ist bei der Montage ungünstig und darüber hinaus kostenintensiv, da die Lagergehäuse des Wischerlagers einstückig mit dem Trägerrohr ausgebildet sind.

Aus der EP-A-1 125 805 ist eine Scheibenwischvorrichtung nach dem Oberbegriff des unabhängigen Anspruchs bekannt.

### Vorteile der Erfindung

Die erfindungsgemäße Scheibenwischvorrichtung mit den Merkmalen des Hauptanspruchs hat den Vorteil, dass durch ein antriebsseitiges Anordnen der Querlöcher im Trägerrohr die Scheibenwischvorrichtung einfacher und schneller montiert werden kann und die Wischerlager in gewohnter Weise an das Trägerrohr montiert werden können. Außerdem wird der Bauraumbedarf der Scheibenwischvorrichtung reduziert, da die Wischerlager selbst auf diese Weise des äußerste Ende der Scheibenwischvorrichtung bilden können. Darüber hinaus wird auf dieser Weise das Schwingungsverhalten der Scheibenwischanlage verbessert und somit die Lebensdauer der Scheibenwischvorrichtung verlängert. Dies gilt insbesondere dann, wenn die Scheibenwischvorrichtung ausschließlich antriebsseitig befestigt ist.

Das Trägerrohr weist entlang seiner Längserstreckung drei im wesentliche gleich große Abschnitte auf und die Querlöcher sind im mittleren Abschnitt angeordnet. Da die Antriebseinrichtung im Regelfall in diesen mittleren Bereich des Trägerrohrs angeordnet ist, ist auf diese Weise die Befestigung genau an der Stelle, an der die größte Belastung auf das Trägerrohr wirkt.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn das Trägerrohr zwei Enden aufweist, an denen jeweils ein Wischerlager befestigt ist, wobei die Querlöcher bzw. das Querloch zwischen den beiden Wischerlagern angeordnet ist. Auf diese Weise ergibt sich ein verbessertes Schwingungsverhalten der Scheibenwischvorrichtung, ohne das die Anzahl der Befestigungspunkte erhöht werden muss.

Weist das Trägerrohr entlang seiner Längserstreckung zwei Biegungen auf, durch welche drei Abschnitte definiert werden und sind die Querlöcher im mittleren Abschnitt angeordnet, so ist auch so die Befestigung an der Stelle möglich, an der die Antriebseinrichtung am Trägerrohr befestigt ist.

Von besonderem Vorteil ist es, wenn das Querloch der Scheibenwischvorrichtung in montiertem Zustand von einem bolzenartigen Befestigungsmittel, wie beispielsweise einer Schraube oder einem Niet durchgriffen ist, da diese Befestigungsmittel kostengünstig als Massenware in ausreichender Qualität erhältlich sind.

Zur Dämpfung von Schwingungen und zur Vermeidung von Schallbrücken zwischen Scheibenwischvorrichtung und Fahrzeug ist es besonders vorteilhaft, wenn im Bereich des Querlochs am Trägerrohr ein Dämpfungselement angeordnet ist.

Weiterhin ist es als vorteilhaft anzusehen, wenn am Trägerrohr im Bereich des Querlochs Stabilisierungselemente vorgesehen sind, die die Fixierung der Scheibenwischvorrichtung im Kraftfahrzeug verbessern.

Außerdem ist es als besonders vorteilhaft anzusehen, wenn das Trägerrohr in montiertem Zustand im wesentlichen formschlüssig getragen ist.

### Zeichnung

Ein Ausführungsbeispiel der Erfindung ist in den Zeichnungen dargestellt und in der nachfolgenden Beschreibung näher erläutert. Es zeigen:
Figur 1 eine Scheibenwischvorrichtung in einer perspektivischen Darstellung,
Figur 2 eine Explosionsdarstellung eines Ausschnittes einer erfindungsgemäßen Scheibenwischvorrichtung und
Figur 3 der gleiche Ausschnitt wie in Figur 2 jedoch in montiertem Zustand.

### Beschreibung des Ausführungsbeispiels

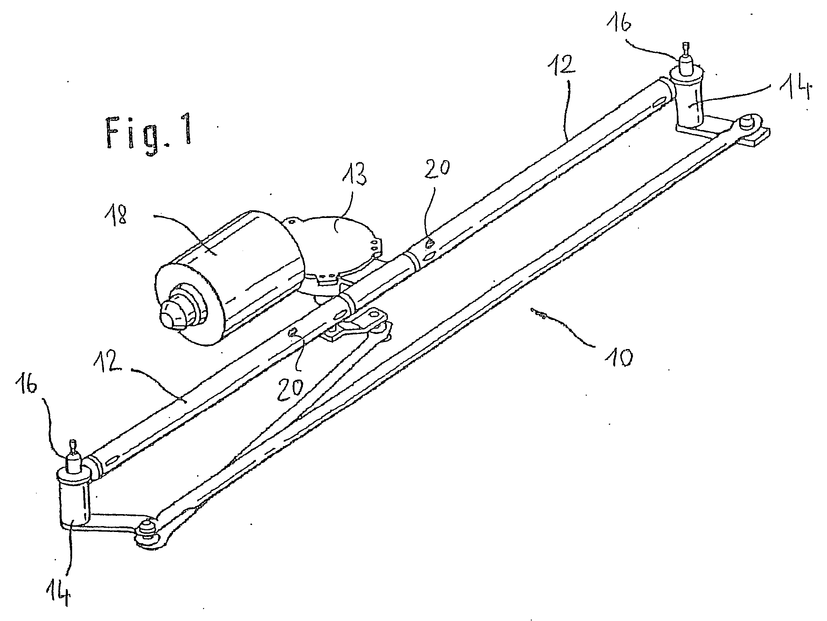

In Figur 1 ist eine Scheibenwischvorrichtung 10 in einer perspektivischen Darstellung gezeigt. Diese besteht im wesentlichen aus einem Trägerrohr 12 an dessen Enden jeweils ein Wischerlager 14 befestigt ist. In diesen Wischerlagern 14 sind die Wischerwellen 16 gelagert, welche mit einem hier nicht gezeigten Scheibenwischerarm drehfest verbindbar sind. Zwischen den beiden Wischerlagern 14 ist eine Antriebseinrichtung 18 angeordnet und am Trägerrohr 12 befestigt. Die Antriebseinrichtung 18 ist hier als Elektromotor ausgebildet, an dessen Ankerwelle sich ein Schneckengetriebe 13 anschließt. Zur Befestigung weist das Trägerrohr 12 zwei Querlöcher 20 auf, die sich quer zur Längserstreckung des Trägerrohrs 12, im wesentlichen parallel zur Wischerwelle 16 erstrecken und als durchgängige Bohrung mit einem Durchmesser von etwa 4 bis 10 Millimetern ausgebildet sind. Die Querlöcher 20 sind dabei entlang der Längserstreckung des Trägerrohrs 12 zwischen den beiden Wischerlagern 14, also auf der Seite der Wischerlager 14, die der Antriebseinrichtung 18 zugewandt sind, angeordnet.

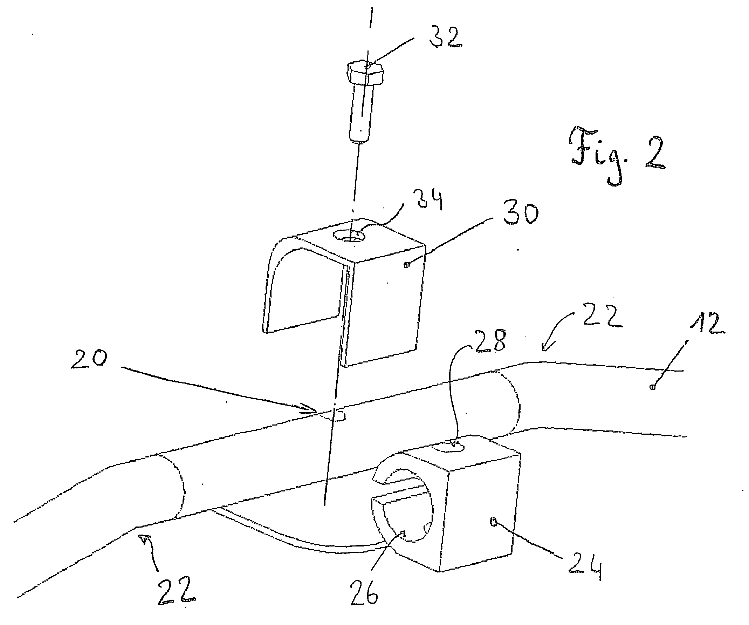

In Figur 2 ist der Befestigungsbereich des Trägerrohrs 12 detailliert in einer Explosionszeichnung dargestellt. Das Trägerrohr 12 weist zwei Biegungen 22 auf, die das Trägerrohr 12 in drei Abschnitte untergliedern. Im mittleren Abschnitt des Trägerrohrs 12 ist das Querloch 20 wiederum als durchgängige Bohrung gezeigt. Zur Verbesserung der Verbindung ist weiterhin ein Dämpfungselement 24 vorgesehen, welches aus einer Gummimanschette besteht, die eine geschlitzte Öffnung 26 aufweist, in die das Trägerrohr 12 aufnehmbar ist. Das Dämpfungselement 24 weist eine dem Querloch 20 entsprechende Durchgangsbohrung 28 auf, die in montierter Position konzentrisch zum Querloch 20 verläuft.
Prinzipiell können die Querlöcher 20 auch auf der antriebsabgewandten Seite angeordnet sein, insbesondere wenn die Dämpfungselemente 24 das Trägerrohr 12 entsprechend umgreifen.

Zur endgültigen Befestigung ist ein umgekehrt U-förmiges Stabilisierungselement 30 vorgesehen, welches in montierter Position das Dämpfungselement 24 brücken- oder bügelartig übergreift und sich an dieses anschmiegt. Zur Aufnahme eines Befestigungsmittels 32, das hier als Schraube ausgebildet ist, weist das Stabilisierungselement 30 ebenso eine Bohrung 34 auf, die in montierter Position konzentrisch mit dem Querloch 20 unter Durchgangsbohrung 28 des Dämpfungselements 24 angeordnet ist.

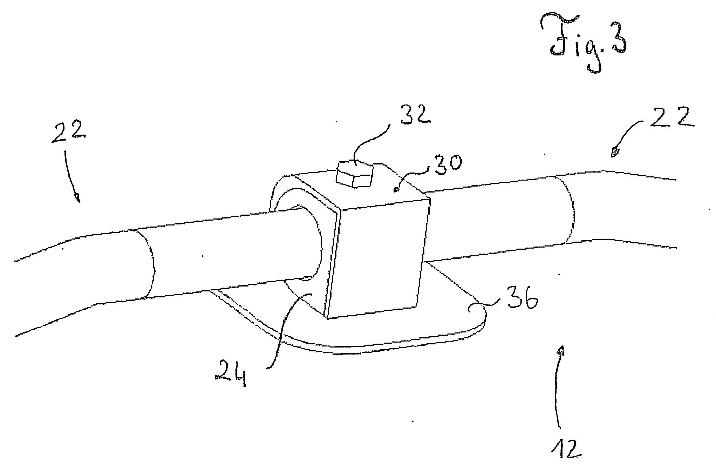

In Figur 3 ist der Befestigungsbereich einer erfindungsgemäßen Scheibenwischvorrichtung in montiertem Zustand dargestellt. Das Trägerrohr 12 wird vom Dämpfungselement 24 formschlüssig umgriffen, welches wiederum vom Stabilisierungselement 30 brückenartig umschlossen wird. Das Befestigungsmittel 32 durchgreift die Bohrung 34 des Stabilisierungselementes 30, die Durchgangsbohrung 28 des Dämpfungselements 24 und das Querloch 20 des Trägerrohrs 12 und ist in einer Befestigungsplatte 36 beispielsweise an der Karosserie des Kraftfahrzeugs festgeschraubt.

Durch die brückenartige Ausbildung des Stabilisierungselementes 30 ergibt sich, dass das Trägerrohr 12 im wesentlichen formschlüssig gehalten ist, wenn die Lateralschenkel des U-förmigen Stabilisierungselementes 30 auf der Befestigungsplatte 36 aufsitzen. Durch den Fachmann geläufige Modifikationen, beispielsweise einer Verkürzung der Lateralschenkel, kann das Stabilisierungselement 30 jedoch auch so ausgebildet sein, dass das Trägerrohr 12 nicht nur formschlüssig sondern auch kraftschlüssig oder nur kraftschlüssig an der Befestigungsplatte 36 gehalten ist.

In einer Variation der Erfindung können beispielsweise zwei Querlöcher 20 vorgesehen sein, die antriebsseitig unmittelbar neben den Wischerlagern 14 angeordnet sind und gleichzeitig zur Befestigung des Wischerlagers 14 am Trägerrohr 12 dienen. Diese Befestigung ist auch noch durch eine Bohrung 20 im mittleren Abschnitt des Trägerrohrs 12 ergänzt werden. Die Scheibenwischvorrichtung 10 ist dabei ausschließlich mittels der antriebsseitigen Querlöcher 20 an der Befestigungsplatte 36 befestigt.

## Patentansprüche

1. Scheibenwischvorrichtung (10), insbesondere für ein Kraftfahrzeug, mindestens umfassend
- ein Trägerrohr (12) mit mindestens einem Querloch (20) zur Befestigung der Scheibenwischvorrichtung (10),
- eine am Trägerrohr (12) befestigte Antriebseinrichtung (18) und
- ein an einem Ende des Trägerrohrs (12) befestigtes Wischerlager (14), das eine Wischerwelle (16) lagert,
- wobei das mindestens eine Querloch (20) antriebsseitig vom Wischerlager (14) angeordnet ist,
**dadurch gekennzeichnet, dass**
- das Trägerrohr (12) entlang seiner Längserstreckung drei im wesentlichen gleich große Abschnitte aufweist und das mindestens eine Querloch (20) im mittleren Abschnitt angeordnet ist.

2. Scheibenwischvorrichtung (10) nach Anspruch 1, **dadurch gekennzeichnet, dass** das Trägerrohr (12) zwei freie Enden aufweist, an denen jeweils ein Wischerlager (14) befestigt ist und dass das mindestens eine Querloch (20) zwischen den beiden Wischerlagern (14) angeordnet ist.

3. Scheibenwischvorrichtung (10) nach einem der vorhergehenden Ansprüche, **dadurch gekennzeichnet, dass** das Trägerrohr (12) entlang seiner Längserstreckung zwei Biegungen (22) aufweist, durch welche drei Abschnitte definiert werden und das mindestens eine Querloch (20) im mittleren Abschnitt angeordnet ist.

4. Scheibenwischvorrichtung (10) nach einem der vorhergehenden Ansprüche, **dadurch gekennzeichnet, dass** in montiertem Zustand das Querloch (20) von einem bolzenartigen Befestigungsmittel (32) durchgriffen ist.

5. Scheibenwischvorrichtung (10) nach einem der vorhergehenden Ansprüche, **dadurch gekennzeichnet, dass** am Trägerrohr (12) im Bereich des Querlochs (20) ein Dämpfungselement (24) angeordnet ist, insbesondere derart, dass das Trägerrohr (12) im Bereich des Querlochs (20) vom Dämpfungselement (24) formschlüssig umgriffen ist.

6. Scheibenwischvorrichtung (10) nach einem der vorhergehenden Ansprüche, **dadurch gekennzeichnet, dass** am Trägerrohr (12) im Bereichs des Querlochs (20) ein Stabilisierungselement (30) vorgesehen ist.

7. Scheibenwischvorrichtung (10) nach einem der vorhergehenden Ansprüche, **dadurch gekennzeichnet, dass** das Trägerrohr (12) in montiertem Zustand im wesentlichen formschlüssig getragen ist.

## Claims

1. Windscreen wiper device (10), in particular for a motor vehicle, at least comprising
- a support tube (12) with at least one transverse hole (20) for fastening the windscreen wiper device (10),
- a drive device (18) fastened to the support tube (12), and
- a wiper bearing (14) which is fastened to one end of the support tube (12) and supports a wiper shaft (16),
- the at least one transverse hole (20) being arranged on the drive side of the wiper bearing (14),
**characterized in that**
- the support tube (12) has three essentially equally sized sections along its longitudinal extent and the at least one transverse hole (20) is arranged in the central section.

2. windscreen wiper device (10) according to Claim 1, **characterized in that** the support tube (12) has two free ends to which a respective wiper bearing (14) is fastened, and **in that** the at least one transverse hole (20) is arranged between the two wiper bearings (14).

3. Windscreen wiper device (10) according to one of the preceding claims, **characterized in that** the support tube (12) has two bends (22) along its longitudinal extent, by means of which three sections are defined, and the at least one transverse hole (20) is arranged in the central section.

4. Windscreen wiper device (10) according to one of the preceding claims, **characterized in that**, in the fitted state, a bolt-like fastening means (32) reaches through the transverse hole (20).

5. Windscreen wiper device (10) according to one of the preceding claims, **characterized in that** a damping element (24) is arranged on the support tube (12) in the region of the transverse hole (20), in particular in such a manner that the support tube (12) is engaged around in a form-fitting manner by the damping element (24) in the region of the transverse hole (20).

6. Windscreen wiper device (10) according to one of the preceding claims, **characterized in that** a stabilizing element (30) is arranged on the support tube (12) in the region of the transverse hole (20).

7. Windscreen wiper device (10) according to one of the preceding claims, **characterized in that** the support tube (12) is supported in an essentially form-fitting manner in the fitted state.

## Revendications

1. Dispositif d'essuie-glace (10), notamment pour un véhicule automobile comportant au moins :
- un tube de support (12) ayant au moins un perçage transversal (20) pour fixer le dispositif d'essuie-glace (10),
- une installation d'entraînement (18) fixée au tube de support (12), et
- un palier d'essuie-glace (14) fixé à une extrémité du tube de support (12) pour recevoir un axe d'essuie-glace (16),
- le perçage transversal (20) étant prévu du côté d'entraînement par rapport au palier d'essuie-glace (14),
**caractérisé en ce que**
le tube de support (12) présente suivant sa longueur trois segments principalement de même dimension et le perçage transversal (20) est prévu dans le segment central.

2. Dispositif d'essuie-glace (10) selon la revendication 1,
**caractérisé en ce que**
le tube de support (12) a deux extrémités libres et à chacune d'elle est fixé un palier d'essuie-glace (14), et au moins un perçage transversal (20) est prévu entre les deux paliers d'essuie-glace (14).

3. Dispositif d'essuie-glace (10) selon l'une quelconque des revendications précédentes,
**caractérisé en ce que**
le tube de support (12) comporte suivant son extension longitudinale deux parties cintrées (22) définissant trois segments et le perçage transversal (20) est prévu dans le segment central.

4. Dispositif d'essuie-glace (10) selon l'une quelconque des revendications précédentes,
**caractérisé en ce qu'**
à l'état monté, le perçage transversal (20) est traversé par un moyen de fixation (32) en forme de goujon.

5. Dispositif d'essuie-glace (10) selon l'une quelconque des revendications précédentes,
**caractérisé en ce que**
dans la zone du perçage transversal (20) du tube de support (12), il est prévu un élément d'amortissement (24) notamment de façon que le tube de support (12) soit entouré par une liaison de forme par l'élément d'amortissement (24) dans la zone du perçage transversal (20).

6. Dispositif d'essuie-glace (10) selon l'une quelconque des revendications précédentes,
**caractérisé en ce que**
dans la zone du perçage transversal (20), le tube de support (12) comporte un élément de stabilisation (30).

7. Dispositif d'essuie-glace (10) selon l'une quelconque des revendications précédentes,
**caractérisé en ce qu'**
à l'état monté, le tube de support (12) est porté principalement par une liaison de forme.
